(19) Europäisches Patentamt
European Patent Office
Office européen des brevets

(11) **EP 4 715 754 A1**

(12) **EUROPEAN PATENT APPLICATION**
published in accordance with Art. 153(4) EPC

(43) Date of publication:
**25.03.2026 Bulletin 2026/13**

(21) Application number: **24830730.8**

(22) Date of filing: **25.06.2024**

(51) International Patent Classification (IPC):
**G06V 10/77** *(2022.01)*

(86) International application number:
**PCT/CN2024/101161**

(87) International publication number:
**WO 2025/002088 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 CN 202310792993**

(71) Applicant: **Huawei Technologies Co., Ltd.
Shenzhen, Guangdong 518129 (CN)**

(72) Inventors:
• **CHEN, Xinghao**
 **Shenzhen, Guangdong 518129 (CN)**
• **LI, Siwei**
 **Shenzhen, Guangdong 518129 (CN)**
• **YANG, Yijing**
 **Shenzhen, Guangdong 518129 (CN)**
• **WANG, Yunhe**
 **Shenzhen, Guangdong 518129 (CN)**

(74) Representative: **Gill Jennings & Every LLP
The Broadgate Tower
20 Primrose Street
London EC2A 2ES (GB)**

(54) **OBJECT DETECTION METHOD AND RELATED DEVICE THEREOF**

(57) This application discloses an object detection method and a related device thereof, which can quickly complete an object detection task and improve completion efficiency of the object detection task, thereby improving user experience. The method of this application includes: When object detection is to be performed on a target image, the target image including a to-be-detected object may be first obtained and then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed.

Obtain a target image, where the target image includes a to-be-detected object — 501

Perform feature extraction on the target image, to obtain a first feature of the target image — 502

Encode the first feature to obtain a second feature of the target image, where the encoding includes at least one convolution and does not include attention mechanism–based processing — 503

Decode the second feature based on a preset query vector, to obtain a third feature of the target image, where the decoding includes at least one convolution and does not include attention mechanism–based processing — 504

Obtain a detection result of the target image based on the third feature, where the detection result is used to determine position information of the object and a category of the object — 505

FIG. 5

**Description**

This application claims priority to Chinese Patent Application No. 202310792993.X, filed with the China National Intellectual Property Administration on June 29, 2023 and entitled "OBJECT DETECTION METHOD AND RELATED DEVICE THEREOF", which is incorporated herein by reference in its entirety.

**TECHNICAL FIELD**

Embodiments of this application relate to artificial intelligence (artificial intelligence, AI), and in particular, to an object detection method and a related device thereof.

**BACKGROUND**

Object detection is one of the most basic tasks in computer vision, and is crucial for many practical applications. In recent years, transformer models and their variants have demonstrated outstanding performance in image classification tasks. Therefore, the transformer models may be transferred to object detection tasks, to improve processing effect of the object detection tasks.

Currently, when an object included in a target image needs to be detected, the target image may be first input to a transformer model. In this case, the transformer model may first extract an initial feature of the target image. Next, the transformer model may process the initial feature of the target image based on a self-attention (self-attention) mechanism, to obtain an intermediate feature of the target image. Then, the transformer model may process the intermediate feature of the target image based on the self-attention mechanism and a cross-attention (cross-attention) mechanism, to obtain a final feature of the target image. Finally, the transformer model may obtain a detection result of the target image based on the final feature of the target image, so that position information of the object and a category of the object can be determined.

In the foregoing process, because the transformer model is mainly built based on an attention mechanism, high computing costs need to be consumed during object detection performed by the transformer model. If a device equipped with the transformer model has low computing power, it may reduce a speed of object detection and affects efficiency of object detection, resulting in poor user experience.

**SUMMARY**

Embodiments of this application provide an object detection method and a related device thereof, which can quickly complete an object detection task and improve completion efficiency of the object detection task, thereby improving user experience.

A first aspect of embodiments of this application provides an object detection method. The method may be implemented by using a target model, and the method includes the following steps.

When object detection is to be performed on a target image, the target image and a preset query vector may be first obtained. Content presented in the target image includes one or more to-be-detected objects.

After the target image and the query vector are obtained, the target image and the preset query vector may be input to the target model. In this case, the target model may first perform feature extraction on the target image, to obtain a first feature of the target image. After the first feature of the target image is obtained, the target model may encode the first feature of the target image, to obtain a second feature of the target image. After the second feature of the target image is obtained, the target model may decode the second feature of the target image by using the preset query vector, to obtain a third feature of the target image. After the third feature of the target image is obtained, the target model may further process the third feature of the target image, to obtain a detection result of the target image.

It should be noted that encoding performed by the target model on the first feature of the target image may include at least one convolution, but does not include any attention mechanism-based processing. Further, decoding performed by the target model on the second feature of the target image may include at least one convolution, but also does not include any attention mechanism-based processing.

The detection result of the target image includes position information of at least one object detected by the model, a category of the at least one object, and a confidence level of the at least one object. Therefore, position information and a category of an object with a low confidence level may be removed, while position information and a category of an object with a high confidence level are retained, and are used as position information and a category of an object finally detected by the model. In this case, the object detection for the target image is completed.

It can be learned from the foregoing method that, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution. In the foregoing implementation, the target model may perform at least one depthwise convolution and/or at least one pointwise convolution on the first feature of the target image, to obtain the second feature of the target image.

In a possible implementation, decoding the second feature based on the preset query vector, to obtain the third feature of the target image includes: performing first processing on the preset query vector, to obtain a fourth feature of the query vector, where the first processing includes the depthwise convolution and the pointwise convolution; performing second processing on the second feature and the fourth feature, to obtain a fifth feature of the target image, where the second processing includes the depthwise convolution; and performing third processing on the fifth feature, to obtain the third feature of the target image. In the foregoing implementation, after the preset query vector and the second feature of the target image are obtained, the target model may first perform the first processing on the preset query vector, to obtain the fourth feature of the query vector. The first processing performed by the target model on the query vector may include at least the depthwise convolution and the pointwise convolution, but does not include any attention mechanism-based processing. After the fourth feature of the query vector is obtained, the target model may perform the second processing on the second feature of the target image and the fourth feature of the query vector, to obtain the fifth feature of the target image. The second processing performed by the target model on the second feature and the fourth feature may include at least the depthwise convolution, but does not include any attention mechanism-based processing. After the fifth feature of the target image is obtained, the target model may perform the third processing on the fifth feature of the target image, to obtain the third feature of the target image.

In a possible implementation, performing the first processing on the preset query vector, to obtain the fourth feature of the query vector includes: performing the depthwise convolution and the pointwise convolution on the preset query vector, to obtain a sixth feature of the query vector; and adding the sixth feature and the query vector, to obtain the fourth feature of the query vector. In the foregoing implementation, after the preset query vector is obtained, the target model may first perform at least one depthwise convolution and at least one pointwise convolution on the preset query vector, to obtain the sixth feature of the query vector. After the sixth feature of the query vector is obtained, the target model may further add the sixth feature of the query vector and the query vector, to obtain the fourth feature of the query vector.

In a possible implementation, performing the second processing on the second feature and the fourth feature, to obtain the fifth feature of the target image includes: performing upsampling on the fourth feature, to obtain a seventh feature of the query vector; fusing the second feature and the seventh feature, to obtain an eighth feature of the target image; performing the depthwise convolution on the eighth feature, to obtain a ninth feature of the target image; and adding the ninth feature and the seventh feature, to obtain the fifth feature of the target image. In the foregoing implementation, after the fourth feature of the query vector is obtained, the target model may first perform upsampling on the fourth feature of the query vector, to obtain the seventh feature of the query vector. After the seventh feature of the query vector and the second feature of the target image are obtained, the target model may fuse the second feature of the target image and the seventh feature of the query vector, to obtain the eighth feature of the target image. After the eighth feature of the target image is obtained, the target model may perform at least one depthwise convolution on the eighth feature of the target image, to obtain the ninth feature of the target image. After the ninth feature of the target image is obtained, the target model may add the ninth feature of the target image and the seventh feature of the query vector, to obtain the fifth feature of the target image.

In a possible implementation, performing the third processing on the fifth feature, to obtain the third feature of the target image includes: performing feedforward neural network-based processing on the fifth feature, to obtain a tenth feature of the target image; adding the fifth feature and the tenth feature, to obtain an eleventh feature of the target image; and performing pooling on the eleventh feature, to obtain the third feature of the target image. In the foregoing implementation, after the fifth feature of the target image is obtained, the target model may first perform feedforward neural network-based processing on the fifth feature, to obtain the tenth feature of the target image. After the tenth feature of the target image is obtained, the target model may add the fifth feature of the target image and the tenth feature of the target image, to obtain the eleventh feature of the target image. After the eleventh feature of the target image is obtained, the target model may perform pooling on the eleventh feature of the target image, to obtain the third feature of the target image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

A second aspect of embodiments of this application provides a model training method. The method includes: obtaining a training image, where the training image includes a to-be-detected object; processing the training image by using a to-be-trained model, to obtain a detection result of the training image, where the detection result is used to determine position information of the object and a category of the object, and the to-be-trained model is configured to: perform feature extraction on the training image, to obtain a first feature of the training image; encode the first feature to obtain a second feature of the training image, where the encoding includes at least one convolution and does not include attention mechanism-based processing; decode the second feature based on a preset query vector, to obtain a third feature of the training image, where the decoding includes at least one convolution and does not include attention mechanism-based processing; and obtain a detection result of the training image based on the third feature; and training the to-be-trained model based on the detection result and a ground-truth detection result of the training image, to obtain a target model.

The target model obtained through training in the foregoing method has a function of object detection. Specifically, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution.

In a possible implementation, decoding the second feature based on the preset query vector, to obtain the third feature of the training image includes: performing first processing on the preset query vector, to obtain a fourth feature of the query vector, where the first processing includes the depthwise convolution and the pointwise convolution; performing second processing on the second feature and the fourth feature, to obtain a fifth feature of the training image, where the second processing includes the depthwise convolution; and performing third processing on the fifth feature, to obtain the third feature of the training image.

In a possible implementation, performing the first processing on the preset query vector, to obtain the fourth feature of the query vector includes: performing the depthwise convolution and the pointwise convolution on the preset query vector, to obtain a sixth feature of the query vector; and adding the sixth feature and the query vector, to obtain the fourth feature of the query vector.

In a possible implementation, performing the second processing on the second feature and the fourth feature, to obtain the fifth feature of the training image includes: performing upsampling on the fourth feature, to obtain a seventh feature of the query vector; fusing the second feature and the seventh feature, to obtain an eighth feature of the training image; performing the depthwise convolution on the eighth feature, to obtain a ninth feature of the training image; and adding the ninth feature and the seventh feature, to obtain the fifth feature of the training image.

In a possible implementation, performing the third processing on the fifth feature, to obtain the third feature of the training image includes: performing feedforward neural network-based processing on the fifth feature, to obtain a tenth feature of the training image; adding the fifth feature and the tenth feature, to obtain an eleventh feature of the training image; and performing pooling on the eleventh feature, to obtain the third feature of the training image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

A third aspect of embodiments of this application provides an object detection apparatus. The apparatus includes a target model, and the apparatus includes: an obtaining module, configured to obtain a target image, where the target image includes a to-be-detected object; an extraction module, configured to perform feature extraction on the target image, to obtain a first feature of the target image; an encoding module, configured to encode the first feature to obtain a second feature of the target image, where the encoding includes at least one convolution and does not include attention mechanism-based processing; a decoding module, configured to decode the second feature based on a preset query vector, to obtain a third feature of the target image, where the decoding includes at least one convolution and does not include attention mechanism-based processing; and a detection module, configured to obtain a detection result of the target image based on the third feature, where the detection result is used to determine position information of the object and a category of the object.

It can be learned from the foregoing apparatus that, when the object detection is to be performed on the target image, the target image including a to-be-detected object may be first obtained, and the target image is then input to the target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution.

In a possible implementation, the decoding module is configured to: perform first processing on the preset query vector, to obtain a fourth feature of the query vector, where the first processing includes the depthwise convolution and the pointwise convolution; perform second processing on the second feature and the fourth feature, to obtain a fifth feature of the target image, where the second processing includes the depthwise convolution; and perform third processing on the fifth feature, to obtain the third feature of the target image.

In a possible implementation, the decoding module is configured to: perform the depthwise convolution and the pointwise convolution on the preset query vector, to obtain a sixth feature of the query vector; and add the sixth feature and the query vector, to obtain the fourth feature of the query vector.

In a possible implementation, the decoding module is configured to: perform upsampling on the fourth feature, to obtain a seventh feature of the query vector; fuse the second feature and the seventh feature, to obtain an eighth feature of the target image; perform the depthwise convolution on the eighth feature, to obtain a ninth feature of the target image; and add the ninth feature and the seventh feature, to obtain the fifth feature of the target image.

In a possible implementation, the decoding module is configured to: perform feedforward neural network-based processing on the fifth feature, to obtain a tenth feature of the target image; add the fifth feature and the tenth feature, to obtain an eleventh feature of the target image; and perform pooling on the eleventh feature, to obtain the third feature of the target image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

A fourth aspect of embodiments of this application provides a model training apparatus. The apparatus includes: an obtaining module, configured to obtain a training image, where the training image includes a to-be-detected object; a processing module, configured to process the training image by using a to-be-trained model, to obtain a detection result of the training image, where the detection result is used to determine position information of the object and a category of the object, and the to-be-trained model is configured to: perform feature extraction on the training image, to obtain a first feature of the training image; encode the first feature to obtain a second feature of the training image, where the encoding includes at least one convolution and does not include attention mechanism-based processing; decode the second feature based on a preset query vector, to obtain a third feature of the training image, where the decoding includes at least one convolution and does not include attention mechanism-based processing; and obtain a detection result of the training image based on the third feature; and a training module, configured to train the to-be-trained model based on the detection result and a ground-truth detection result of the training image, to obtain a target model.

The target model obtained through training in embodiments of this application has a function of object detection. Specifically, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution.

In a possible implementation, the to-be-trained model is configured to: perform first processing on the preset query vector, to obtain a fourth feature of the query vector, where the first processing includes the depthwise convolution and the pointwise convolution; perform second processing on the second feature and the fourth feature, to obtain a fifth feature of the training image, where the second processing includes the depthwise convolution; and perform third processing on the fifth feature, to obtain the third feature of the training image.

In a possible implementation, the to-be-trained model is configured to: perform the depthwise convolution and the pointwise convolution on the preset query vector, to obtain a sixth feature of the query vector; and add the sixth feature and the query vector, to obtain the fourth feature of the query vector.

In a possible implementation, the to-be-trained model is configured to: perform upsampling on the fourth feature, to obtain a seventh feature of the query vector; fuse the second feature and the seventh feature, to obtain an eighth feature of the training image; perform the depthwise convolution on the eighth feature, to obtain a ninth feature of the training image; and add the ninth feature and the seventh feature, to obtain the fifth feature of the training image.

In a possible implementation, the to-be-trained model is configured to: perform feedforward neural network-based processing on the fifth feature, to obtain a tenth feature of the training image; add the fifth feature and the tenth feature, to obtain an eleventh feature of the training image; and perform pooling on the eleventh feature, to obtain the third feature of the training image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

A fifth aspect of embodiments of this application provides an object detection apparatus. The apparatus includes a memory and a processor. The memory stores code, and the processor is configured to execute the code. When the code is executed, the object detection apparatus performs the method according to the first aspect or any one of the possible implementations of the first aspect.

A sixth aspect of embodiments of this application provides a model training apparatus. The apparatus includes a memory and a processor. The memory stores code, and the processor is configured to execute the code. When the code is executed, the model training apparatus performs the method according to the second aspect or any one of the possible implementations of the second aspect.

A seventh aspect of embodiments of this application provides a circuit system. The circuit system includes a processing circuit. The processing circuit is configured to perform the method according to the first aspect, any one of the possible implementations of the first aspect, the second aspect, or any one of the possible implementations of the second aspect.

An eighth aspect of embodiments of this application provides a chip system. The chip system includes a processor. The processor is configured to invoke a computer program or computer instructions stored in a memory, so that the processor performs the method according to the first aspect, any one of the possible implementations of the first aspect, the second aspect, or any one of the possible implementations of the second aspect.

In a possible implementation, the processor is coupled to the memory through an interface.

In a possible implementation, the chip system further includes the memory. The memory stores the computer program or the computer instructions.

A ninth aspect of embodiments of this application provides a computer storage medium. The computer storage medium stores a computer program. When the program is executed by a computer, the computer is enabled to perform the method according to the first aspect, any one of the possible implementations of the first aspect, the second aspect, or any one of the possible implementations of the second aspect.

A tenth aspect of embodiments of this application provides a computer program product. The computer program product stores instructions. When the instructions are executed by a computer, the computer is enabled to perform the method according to the first aspect, any one of the possible implementations of the first aspect, the second aspect, or any one of the possible implementations of the second aspect.

In embodiments of this application, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

## BRIEF DESCRIPTION OF DRAWINGS

FIG. 1 is a diagram of a structure of an artificial intelligence main framework;
FIG. 2a is a diagram of a structure of an object detection system according to an embodiment of this application;
FIG. 2b is a diagram of another structure of an object detection system according to an embodiment of this application;
FIG. 2c is a diagram of a related device for object detection according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of an object detection method according to an embodiment of this application;
FIG. 6 is a diagram of a structure of a target model according to an embodiment of this application;
FIG. 7 is a diagram of a structure of a decoder according to an embodiment of this application;
FIG. 8 is a diagram of another structure of a target model according to an embodiment of this application;
FIG. 9 is a diagram of a comparison result according to an embodiment of this application;
FIG. 10 is a schematic flowchart of a model training method according to an embodiment of this application;
FIG. 11 is a diagram of a structure of an object detection apparatus according to an embodiment of this application;
FIG. 12 is a diagram of a structure of a model training apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

## DESCRIPTION OF EMBODIMENTS

Embodiments of this application provide an object detection method and a related device thereof, which can quickly complete an object detection task and improve completion efficiency of the object detection task, thereby improving user experience.

In the specification, claims, and accompanying drawings of this application, terms such as "first" and "second" are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover a non-exclusive inclusion, so that a process, method, system, product, or device that includes a series of units is not necessarily limited to those units, but may include other units not expressly listed or inherent to such a process, method, system, product, or device.

Object detection is one of the most basic tasks in computer vision, and is crucial for many practical applications. In recent years, transformer models and their variants have demonstrated outstanding performance in image classification tasks. Therefore, the transformer models may be transferred to object detection tasks, to improve processing effect of the object detection tasks.

Currently, when an object included in a target image needs to be detected, the target image may be first input to a transformer model. In this case, the transformer model may first extract an initial feature of the target image. Next, the transformer model may process the initial feature of the target image based on a self-attention mechanism, to obtain an intermediate feature of the target image. Then, the transformer model may process the intermediate feature of the target image based on the self-attention mechanism and a cross-attention mechanism, to obtain a final feature of the target image. Finally, the transformer model may obtain a detection result of the target image based on the final feature of the target image, so that position information of the object and a category of the object can be determined. For example, it is assumed that an image presents a plurality of objects such as a cat, grass, a flower, and a tree, and the image may be input to the transformer model, so that the transformer model processes the image, to obtain a detection result of the image. In this case, positions of the plurality of objects in the image and categories to which the plurality of objects belong may be determined based on the detection result.

In the foregoing process, because the transformer model is mainly built based on an attention mechanism, high computing costs need to be consumed during object detection performed by the transformer model. If a device equipped with the transformer model has low computing power, it may reduce a speed of object detection and affects efficiency of object detection, resulting in poor user experience.

To resolve the foregoing problem, an embodiment of this application provides an object detection method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence to process data is a common application manner of artificial intelligence.

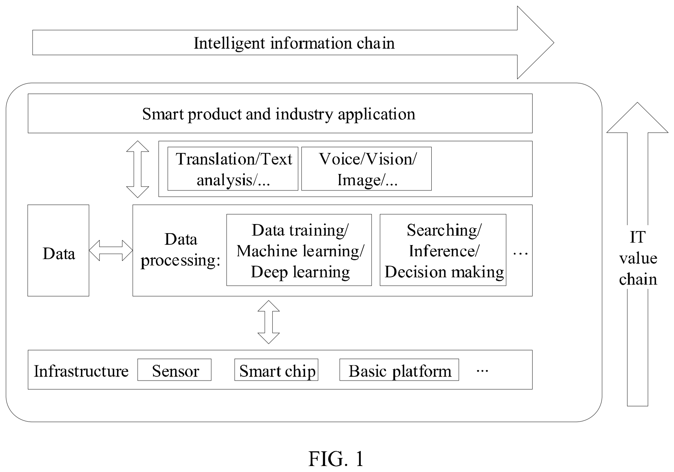

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside through a sensor. A computing capability is provided by a smart chip (a hardware acceleration chip, for example, a CPU, an NPU, a GPU, an ASIC, or an FPGA). The basic platform includes related platform assurance and support such as a distributed computing framework and a network, and may include cloud storage and computing, an interconnected network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formalized intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include a smart terminal, smart transportation, smart health care, autonomous driving, a smart city, and the like.

The following describes several application scenarios of this application.

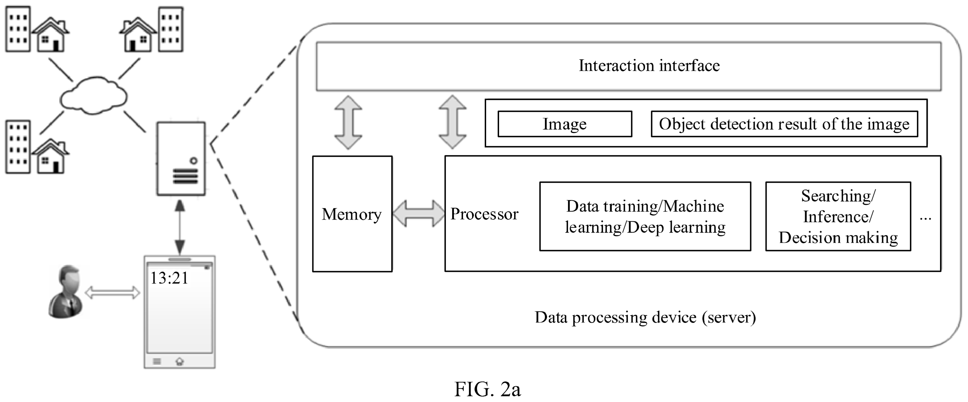

FIG. 2a is a diagram of a structure of an object detection system according to an embodiment of this application. The object detection system includes user equipment and a data processing device. The user equipment includes an intelligent terminal such as a mobile phone, a personal computer, or an information processing center. The user equipment is an initiator of object detection, and is used as an initiator of an object detection request. Generally, a user initiates the request by using the user equipment.

The data processing device may be a device or a server that has a data processing function, for example, a cloud server, a network server, an application server, or a management server. The data processing device receives the object detection request from the smart terminal through an interaction interface, and then performs object detection processing in manners such as machine learning, deep learning, searching, inference, and decision-making by using a memory that stores data and a processor that processes data. The memory in the data processing device may be a general name, and includes a local storage and a database that stores historical data. The database may be on the data processing device, or may be on another network server.

In the object detection system shown in FIG. 2a, the user equipment may receive an instruction of the user. For example, the user equipment may obtain an image input/selected by the user, and then initiate a request to the data processing device, so that the data processing device performs object detection processing on the image on the user equipment, to obtain an object detection result for the image, thereby further determining position information of several objects in the image and categories of the objects. For example, the user may input a target image including a to-be-detected object to the user equipment or select a target image including a to-be-detected object on the user equipment, and then the user equipment initiates an object detection request for the target image to the data processing device, so that the data processing device performs object detection processing on the target image, to obtain an object detection result of the target image. In this way, position information of an object that needs to be detected and a category of the object may be determined based on the object detection result.

In FIG. 2a, the data processing device may perform an object detection method in embodiments of this application.

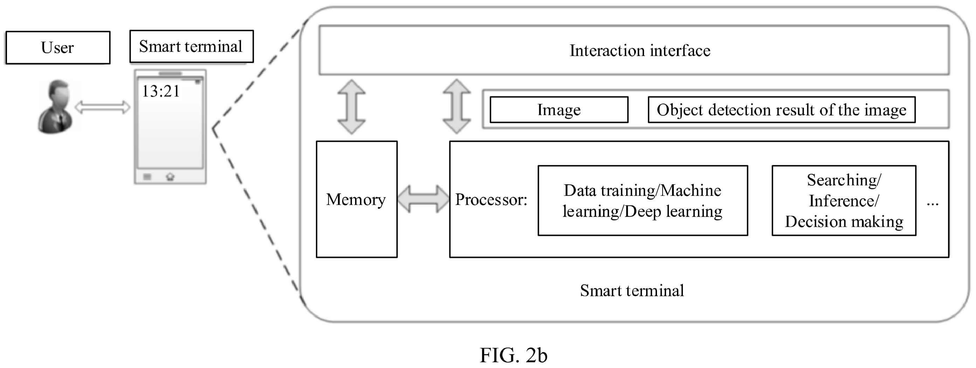

FIG. 2b is a diagram of another structure of an object detection system according to an embodiment of this application. In FIG. 2b, the user equipment is directly used as the data processing device. After determining an image input/selected by the user, the user equipment can directly perform object detection processing on the image. A specific process is similar to that in FIG. 2a. For details, refer to the foregoing descriptions. Details are not described herein again.

In the object detection system shown in FIG. 2b, the user equipment may receive an instruction of the user. For example, the user may input a target image including a to-be-detected object to the user equipment or select a target image including a to-be-detected object on the user equipment, and then the user equipment performs object detection processing on the target image, to obtain an object detection result of the target image. In this way, position information of an object that needs to be detected and a category of the object may be determined based on the object detection result.

In FIG. 2b, the user equipment may perform the object detection method in embodiments of this application.

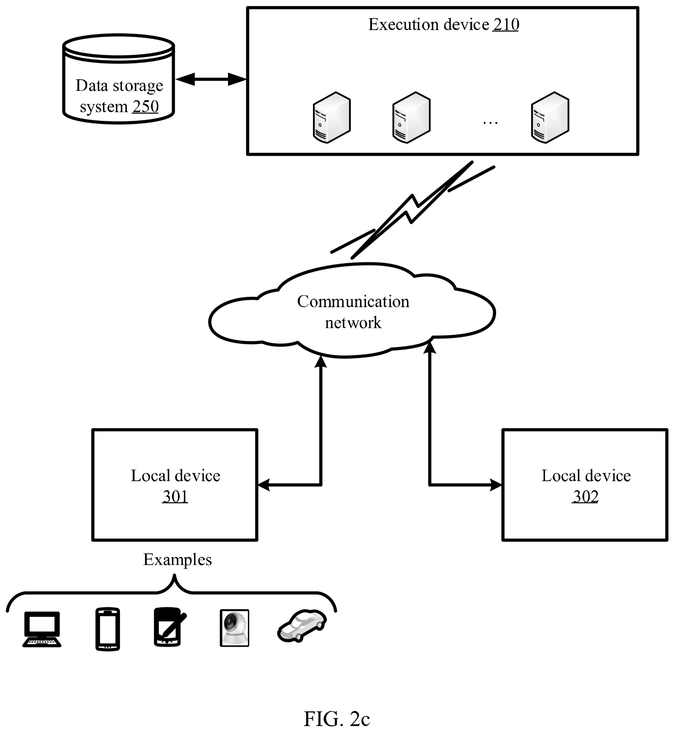

FIG. 2c is a diagram of a related device for object detection according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform object detection processing on an image by using a model obtained through final data training or learning, to obtain a corresponding object detection result.

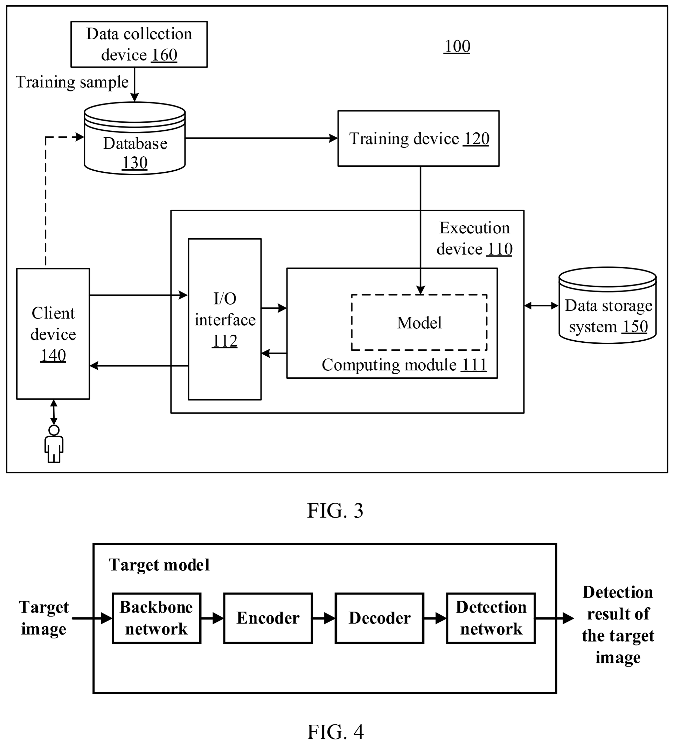

FIG. 3 is a diagram of an architecture of a system 100 according to an embodiment of this application. In FIG. 3, an execution device 110 is configured with an input/output (input/output, I/O) interface 112, to exchange data with an external device. The user may input data to the I/O interface 112 by using a client device 140. In this embodiment of this application, the input data may include: each to-be-scheduled task, a resource that can be invoked, and another parameter.

In a process in which the execution device 110 preprocesses the input data, or in a process in which a computing module 111 of the execution device 110 performs related processing such as computing (for example, performs function implementation of a neural network in this application), the execution device 110 may invoke data, code, and the like in a data storage system 150 for corresponding processing, and may further store, into the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data, where the corresponding target models/rules may be used to achieve the foregoing objectives or complete the foregoing tasks, thereby providing required results for the user. The training data may be stored in a database 130, and is a training sample collected by a data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively serve as a data collection end, to collect, as new sample data, the input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output the target model/rule.

The neural-network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit internally includes a plurality of process engines (process engine, PE). In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory, performs a matrix operation on the data and the matrix B, and stores an obtained partial result or final result of the matrix in an accumulator (accumulator).

A vector calculation unit may perform further processing on an output of the operation circuit, for example, vector multiplication, vector addition, an exponent operation, a logarithm operation, or value comparison. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a non-linear function to the output of the operation circuit, for example, a vector of an accumulated value, to generate an activation value. In some implementations, the vector calculation unit generates a normalized value, a combined value, or both a normalized value and a combined value. In some implementations, the processed output vector can be used as an activation input to the operation circuit, for example, used at a subsequent layer in the neural network.

A unified memory is configured to store input data and output data.

For weight data, a direct memory access controller (direct memory access controller, DMAC) directly transfers input data in the external memory to the input memory and/or the unified memory, stores, into the weight memory, weight data in the external memory, and stores, into the external memory, the data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}(x) = f\left(W^T x\right) = f(\sum\nolimits_{s=1}^{n} W_s x_s + b) \qquad (1)$$

Herein, s=1, 2, ..., n. n is a natural number greater than 1. Ws is a weight of xs. b is a bias of the neuron. f is an activation function (activation function) of the neuron, and is used to introduce a non-linear feature into the neural network, to convert an input signal in the neuron into an output signal. The output signal of the activation function may serve as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". Operations 1, 2, and 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector represents a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning of control of space transformation, and more specifically, learning of a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before a first update, that is, a parameter is preconfigured for each layer of the neural network). For example, if the predicted value of the network is large, the weight vector is adjusted to decrease the predicted value until the neural network can predict the target value that is actually expected. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct a value of a parameter in an initial neural network model by using an error back propagation (back propagation, BP) algorithm, so that a reconstruction error loss of the neural network model becomes increasingly small. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following describes the method provided in this application from a neural network training side and a neural network application side.

The model training method provided in embodiments of this application relates to data sequence processing, and may be specifically applied to a method such as data training, machine learning, and deep learning. Symbolized and formalized intelligent information modeling, extraction, preprocessing, training, and the like are performed on training data (for example, the training image in the model training method provided in embodiments of this application), and finally a trained neural network (for example, a target model in the model training method provided in embodiments of this application) is obtained. In addition, in the object detection method provided in embodiments of this application, input data (for example, the target image in the object detection method provided in embodiments of this application) may be input to the trained neural network by using the foregoing trained neural network, to obtain output data (for example, the detection result of the target image in the object detection method provided in embodiments of this application). It should be noted that the model training method and the object detection method provided in embodiments of this application are inventions based on a same concept, and may also be understood as two parts of a system, or two phases of an overall procedure, for example, a model training phase and a model application phase.

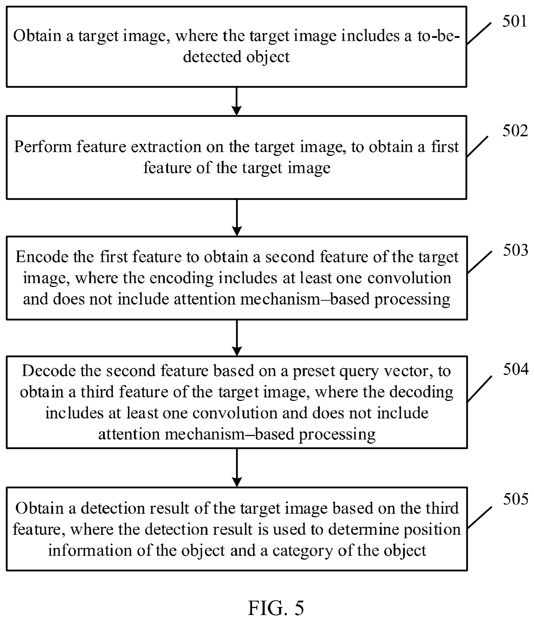

The object detection method provided in embodiments of this application may be implemented by using a target model. FIG. 4 is a diagram of a structure of the target model according to an embodiment of this application. As shown in FIG. 4, the target model includes a plurality of modules such as a backbone network, an encoder, a decoder, and a detection network (detection head), and the plurality of modules are all trained modules. An input end of the backbone network and a first input end of the decoder are used as an input end of the entire target model, an output end of the backbone network is connected to an input end of the encoder, an output end of the encoder is connected to a second input end of the decoder, an output end of the decoder is connected to an input end of the detection network, and an output end of the detection network is used as an output end of the entire target model. To understand a working procedure of implementing object detection based on the target model, the following further describes the working procedure with reference to FIG. 5. FIG. 5 is a schematic flowchart of the object detection method according to an embodiment of this application. As shown in FIG. 5, the method includes the following steps.

501: Obtain a target image, where the target image includes a to-be-detected object.

In this embodiment, when object detection is to be performed on a target image, the target image may be first obtained. Content presented in the target image includes one or more to-be-detected objects. For example, it is assumed that object detection is to be performed on an image. The image may be first captured, and the image presents a plurality of to-be-detected objects, such as a cat, a flower, grass, a tree, ground, and a wall.

502: Perform feature extraction on the target image, to obtain a first feature of the target image.

After the target image is obtained, the target image may be input to the target model, so that feature extraction is performed on the target image by using the target model, to obtain the first feature of the target image.

Specifically, the target model may obtain the first feature of the target image in the following manner.

After the target image is obtained, the target image may be input to the backbone network of the target model. After receiving the target image, the backbone network may perform a series of feature extraction on the target image, to obtain the first feature of the target image; and then send the first feature of the target image to the encoder.

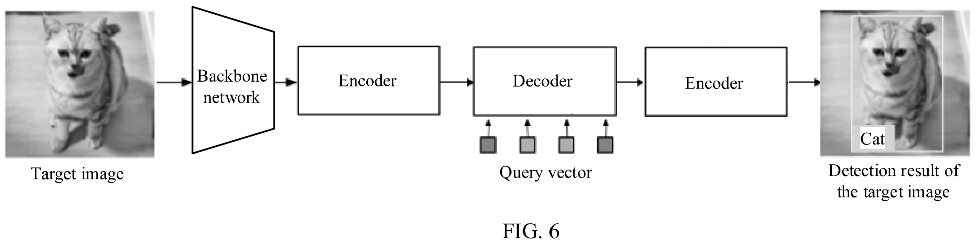

For example, as shown in FIG. 6 (FIG. 6 is a diagram of a structure of the target model according to an embodiment of this application), it is assumed that the target image includes a to-be-detected object, for example, a cat. The target image is input to the backbone network of the target model. The backbone network may perform feature extraction on the target image, to obtain a visual feature (namely, the foregoing first feature) of the target image; and then send the visual feature of the target image to the encoder.

503: Encode the first feature to obtain a second feature of the target image, where the encoding includes at least one convolution and does not include attention mechanism-based processing.

After the first feature of the target image is obtained, the target model may encode the first feature of the target image, to obtain the second feature of the target image. It should be noted that encoding performed by the target model on the first feature of the target image may include at least one convolution, but does not include any attention mechanism-based processing (for example, processing based on a self-attention mechanism or processing based on a cross-attention mechanism).

Specifically, the target model may obtain the second feature of the target image in the following manner.

After the first feature of the target image is obtained, the encoder may encode the first feature of the target image, to obtain the second feature of the target image; and then send the second feature of the target image to the decoder. The encoder includes at least one convolutional layer. For example, these convolutional layers may be one or more of a depthwise convolutional layer, a pointwise convolutional layer, and the like. In this case, the encoder may perform at least one depthwise convolution and/or at least one pointwise convolution on the first feature of the target image, to obtain the second feature of the target image.

Still as in the foregoing example, after the visual feature of the target image is obtained, the encoder formed by the convolutional layer may perform a convolution, for example, a depthwise convolution and/or a pointwise convolution, on the visual feature of the target image, to complete feature enhancement and obtain an encoded feature (namely, the foregoing second feature) of the target image; and then send the encoded feature of the target image to the decoder. The encoded feature of the target image may also be understood as an enhanced visual feature of the target image, which helps more effectively complete object detection subsequently. It should be noted that a size of the encoded feature of the target image may be set to d×H×W. That is, a quantity of channels of the encoded feature is d, a height of the encoded feature is H, and a width of the encoded feature is W. The size of the encoded feature of the target image may be the same as or different from a size of the target image. This is not limited herein.

More specifically, the depthwise convolutional layer included in the encoder may be presented in the following form.

The depthwise convolutional layer for forming the encoder may be one or more of a depthwise standard convolutional layer, a depthwise deformable convolutional layer, a depthwise dynamic convolutional layer, and the like. Correspondingly, encoding performed by the encoder on the first feature of the target image may include one or more of a depthwise standard convolution, a depthwise deformable convolution, a depthwise dynamic convolution, and the like.

More specifically, the pointwise convolutional layer included in the encoder may be presented in the following form.

The pointwise convolutional layer for forming the encoder may be one or more of a pointwise standard convolutional layer, a pointwise deformable convolutional layer, a pointwise dynamic convolutional layer, and the like. Correspondingly, encoding performed by the encoder on the first feature of the target image may include one or more of a pointwise standard convolution, a pointwise deformable convolution, a pointwise dynamic convolution, and the like.

504: Decode the second feature based on a preset query vector, to obtain a third feature of the target image, where the decoding includes at least one convolution and does not include attention mechanism-based processing.

When the target image is obtained, the preset query vector (query) may also be obtained, and the target image and the preset query vector are input to the target model. The query vector includes a plurality of randomly generated parameters (or a plurality of parameters that are fixed values), and a quantity of the parameters (the quantity of the parameters may be set based on an actual requirement, and is not limited herein) is associated with a quantity of objects recognized by the target model. In other words, the quantity of the parameters may determine the quantity of the objects recognized by the target model.

After the second feature of the target image is obtained, the target model may decode the second feature of the target image by using the preset query vector, to obtain a third feature of the target image. It should be noted that decoding performed by the target model on the second feature of the target image may include at least one convolution, but also does not include any attention mechanism-based processing.

Specifically, the target model may obtain the third feature of the target image in the following manner.

(1) After the preset query vector and the second feature of the target image are obtained, because the decoder includes three modules, namely, a self-interaction module (self-interaction module, SIM), a cross-interaction module (cross-interaction module, CIM), and a post-processing module, the self-interaction module may first perform first processing on the preset query vector, to obtain a fourth feature of the query vector; and then send the fourth feature of the query vector to the cross-interaction module. The first processing performed by the self-interaction module on the query vector may include at least the depthwise convolution and the pointwise convolution, but does not include any attention mechanism-based processing.

(2) After the fourth feature of the query vector is obtained, the cross-interaction module may perform second processing on the second feature of the target image and the fourth feature of the query vector, to obtain a fifth feature of the target image; and then send the fifth feature of the target image to the post-processing module. The second processing performed by the cross-interaction module on the second feature and the fourth feature may include at least the depthwise convolution, but does not include any attention mechanism-based processing.

(3) After the fifth feature of the target image is obtained, the post-processing module may perform third processing on the fifth feature of the target image, to obtain the third feature of the target image; and then send the third feature of the target image to the detection network.

More specifically, the self-interaction module may obtain the fourth feature of the query vector in the following manner.

(1.1) After the preset query vector is obtained, because the self-interaction module includes at least one convolutional layer and an addition layer (a skip connection layer), for example, these convolutional layers may be a depthwise convolutional layer and a pointwise convolutional layer. In this case, the self-interaction module may first perform at least one depthwise convolution and at least one pointwise convolution on the preset query vector, to obtain a sixth feature of the query vector.

(1.2) After the sixth feature of the query vector is obtained, the self-interaction module may further add the sixth feature of the query vector and the query vector, to obtain the fourth feature of the query vector; and then send the fourth feature of the query vector to the cross-interaction module.

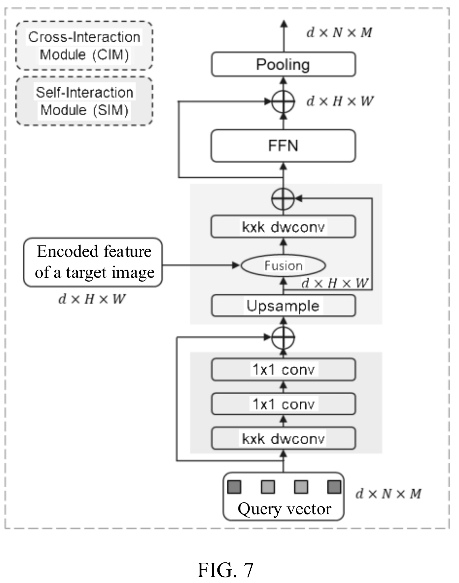

For example, as shown in FIG. 7 (FIG. 7 is a diagram of a structure of the decoder according to an embodiment of this application, and FIG. 7 is drawn based on FIG. 6), it is assumed that the preset query vector is a set of randomly initialized parameters, and a size of the query vector is $d \times N \times M$, where $N \times M$ determines a quantity of detection boxes output by the detection network (one detection box represents position information of one object, and therefore, the quantity of detection boxes is also the quantity of objects). Values of N and M may be the same, or may be different. For example, N=10, and M=20.

The decoder includes the SIM module, the CIM module, and the post-processing module. The SIM module includes a depthwise convolutional ($k \times k$ dwconv) layer, two pointwise convolutional ($1 \times 1$ conv) layers, and an addition layer that are sequentially connected in series. After the preset query vector is input to the SIM module of the decoder, the SIM module may sequentially perform one depthwise convolution and two pointwise convolutions on the query vector, to obtain an initial self-interaction feature (namely, the foregoing sixth feature) of the query vector. Next, the SIM module may add the query vector and the initial self-interaction feature of the query vector, to obtain a final self-interaction feature (namely, the foregoing fourth feature) of the query vector; and then send the final self-interaction feature of the query vector to the CIM module.

More specifically, the cross-interaction module may obtain the fifth feature of the target image in the following manner.

(2.1) After the fourth feature of the query vector is obtained, because the cross-interaction module includes an upsampling layer, a fusion layer, a depthwise convolutional layer, and an addition layer, the cross-interaction module may first perform upsampling on the fourth feature of the query vector, to obtain a seventh feature of the query vector.

(2.2) After the seventh feature of the query vector and the second feature of the target image are obtained, the cross-interaction module may perform fusion (for example, addition, multiplication, subtraction, and concatenation) on the second feature of the target image and the seventh feature of the query vector, to obtain an eighth feature of the target image.

(2.3) After the eighth feature of the target image is obtained, the cross-interaction module may perform at least one depthwise convolution on the eighth feature of the target image, to obtain a ninth feature of the target image.

(2.4) After the ninth feature of the target image is obtained, the cross-interaction module may add the ninth feature of the target image and the seventh feature of the query vector, to obtain the fifth feature of the target image; and then send the fifth feature of the target image to the post-processing module. It may be learned that, after step (2.2) and step (2.4), the cross-interaction module may complete full interaction between features of the target image and features of the query vector. This helps better complete object detection subsequently.

Still as in the foregoing example, the CIM module includes the upsampling (upsample) layer, the fusion (fusion) layer, the depthwise convolutional ($k \times k$ dwconv) layer, and the addition layer that are sequentially connected in series. After the encoded feature of the target image and the final self-interaction feature of the query vector are obtained, the CIM module may first perform upsampling on the final self-interaction feature of the query vector, to obtain an upsampled self-interaction feature (namely, the foregoing seventh feature) of the query vector. An upsampling operation of the CIM module may enable a size of the upsampled self-interaction feature of the query vector to be the same as the size of the encoded feature of the target image. That is, the size of the upsampled self-interaction feature of the query vector is also $d \times H \times W$. The upsampling operation performed by the CIM module is shown in the following formula:

$$\hat{o}=upsample(o) \tag{2}$$

In the foregoing formula, O is the final self-interaction feature of the query vector, and $\hat{o}$ is the upsampled self-interaction feature of the query vector.

Next, the CIM module may fuse the upsampled self-interaction feature of the query vector and the encoded feature of the target image, to obtain a fusion feature (namely, the foregoing eighth feature) of the target image; perform the depthwise convolution on the fusion feature of the target image, to obtain a depth feature (namely, the foregoing ninth feature) of the target image; add the depth feature of the target image and the upsampled self-interaction feature of the query vector, to obtain a cross-interaction feature (namely, the foregoing fifth feature) of the target image; and send the cross-interaction feature of the target image to the post-processing module. The process is shown in the following formula:

$$\hat{o}_f = \hat{o} + dwconv(Fusion(\hat{o}, z)) \tag{3}$$

In the foregoing formula, Z is the encoded feature of the target image, $Fusion(\hat{o}, z)$ is the fusion feature of the target image, $dwconv(Fusion(\hat{o}, z)$ is the depth feature of the target image, and $\hat{o}_f$ is the cross-interaction feature of the target image.

More specifically, the post-processing module may obtain the third feature of the target image in the following manner.

(3.1) After the fifth feature of the target image is obtained, because the post-processing module includes a feedforward neural network layer, an addition layer, and a pooling layer, the post-processing module may first perform feedforward neural network-based processing (for example, convolution and/or full connection) on the fifth feature, to obtain a tenth feature of the target image.

(3.2) After the tenth feature of the target image is obtained, the post-processing module may add the fifth feature of the target image and the tenth feature of the target image, to obtain an eleventh feature of the target image.

(3.3) After the eleventh feature of the target image is obtained, the post-processing module may perform pooling on the eleventh feature of the target image, to obtain the third feature of the target image; and then send the third feature of the target image to the detection network.

Still as in the foregoing example, the post-processing module includes the feedforward neural network (feedforward neural network, FFN) layer, the addition layer, and the pooling (pooling) layer that are sequentially connected in series. After the cross-interaction feature of the target image is obtained, the post-processing module may process the cross-interaction feature of the target image, to obtain a feedforward feature (namely, the foregoing tenth feature) of the target image; add the feedforward feature of the target image and the cross-interaction feature of the target image, to obtain an initial decoded feature (namely, the foregoing eleventh feature) of the target image; and perform pooling on the initial decoded feature of the target image, to obtain a final decoded feature (namely, the foregoing third feature) of the target image; and send the final decoded feature of the target image to the detection network, where a size of the feature is d×N×M. The process is shown in the following formula:

$$\hat{o}_p = pooling(\hat{o}_f + FFN(\hat{o}_f)) \tag{4}$$

In the foregoing formula, $FFN(\hat{o}_f)$ is the feedforward feature of the target image, $\hat{o}_f + FFN(\hat{o}_f)$ is the initial decoded feature of the target image, and $\hat{o}_p$ is the final decoded feature of the target image.

505: Obtain a detection result of the target image based on the third feature, where the detection result is used to determine position information of the object and a category of the object.

After the third feature of the target image is obtained, (the detection network of) the target model may further process the third feature of the target image, to obtain the detection result of the target image. It should be noted that the detection result includes position information of at least one object detected by the model, a category of the at least one object, and a confidence level of the at least one object. The model not only recognizes some essential objects (for example, foreground objects, such as a cat, a flower, grass, and a tree), but also recognizes some non-essential objects (for example, background objects, such as ground and a wall), and confidence levels of the non-essential objects are usually low. Therefore, position information and a category of an object with a low confidence level may be removed, while position information and a category of an object with a high confidence level are retained, and are used as position information and a category of an object finally detected by the model. In this case, the object detection for the target image is completed.

Still as in the foregoing example, the final decoded feature of the target image is obtained. The detection network may perform classification and regression on the final decoded feature of the target image, to obtain a final detection result.

The detection result includes N×M detection boxes, categories of objects in the N×M detection boxes, and confidence levels of the N×M detection boxes. In this case, a detection box with a low confidence level (for example, lower than a threshold, where a value of the threshold may be set based on an actual requirement, and is not limited herein) may be removed, and a remaining detection box with a high confidence level and a category of an object in the detection box are retained. In this case, the object detection for the target image is successfully completed.

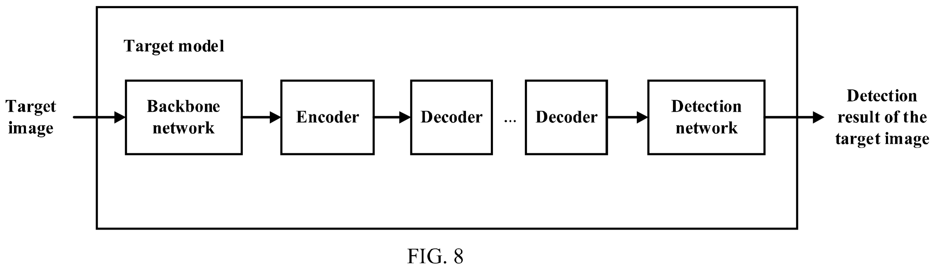

It should be understood that in this embodiment, an example in which the target model includes only one decoder is used for description. During actual application, the target model may further include a plurality of decoders connected in series. As shown in FIG. 8 (FIG. 8 is a diagram of another structure of the target model according to an embodiment of this application), the plurality of decoders are disposed between the encoder and the detection network. An input to a first decoder includes an output of the encoder and the preset query vector; an input to a second decoder includes the output of the encoder, an output of the first decoder (namely, the third feature), and the preset query vector (an input to a SIM module of the second decoder includes the output of the first decoder and the preset query vector); ...; and an input to a last decoder includes the output of the encoder, an output of a second-to-last decoder, and the preset query vector. Then, the detection network may obtain the detection result of the target image based on the output of the last decoder.

In addition, the target model (for example, a DECO in Table 1) provided in embodiments of this application may be further compared with a model in a related technology (for example, a model other than the DECO in Table 1, for example, an FCOS or a DETR) in terms of a detection metric (AP) and an inference speed (FPS). Comparison results are shown in Table 1.

Table 1

| Model | Backbone | GFLOPs | FPS | AP | $AP_{50}$ | $AP_{75}$ | $AP_S$ | $AP_M$ | $AP_L$ |
|---|---|---|---|---|---|---|---|---|---|
| Faster R-CNN | R50-FPN | 180 | 26 | 40.2 | 61.0 | 43.8 | 24.2 | 43.5 | 52.0 |
| Faster R-CNN | R101-FPN | 246 | 20 | 42.0 | 62.5 | 45.9 | 25.2 | 45.6 | 54.6 |
| FCOS | R50-FPN | 201 | 23 | 38.7 | 57.4 | 41.8 | 22.9 | 42.5 | 50.1 |
| FCOS | R101-FPN | 277 | 19 | 39.1 | 58.3 | 42.1 | 22.7 | 43.3 | 50.3 |
| RetinaNet | R50-FPN | 239 | 21 | 37.4 | 56.7 | 39.6 | 20.0 | 40.7 | 49.7 |
| RetinaNet | R101-FPN | 315 | 17 | 38.5 | 57.6 | 41.0 | 21.7 | 42.8 | 50.4 |
| Sparse R-CNN | R50-FPN | 150 | 20 | 37.9 | 56.0 | 40.5 | 20.7 | 40.0 | 53.5 |
| OneNet-RetinaNet | R50-FPN | - | 21 | 37.5 | 55.4 | 40.7 | 21.5 | 40.5 | 47.4 |
| OneNet-FCOS | R50-FPN | - | 26 | 38.9 | 57.2 | 42.2 | 23.9 | 41.8 | 49.4 |
| DeFCN | R50-FPN | - | 19 | 41.4 | 59.5 | 45.6 | 26.1 | 44.9 | 52.0 |
| YOLOS-Ti | DeiT-Tiny | 21 | 52 | 28.7 | 47.2 | 28.9 | 9.7 | 29.2 | 46.0 |
| YOLOS-S | DeiT-Small | 194 | 5 | 36.1 | 55.7 | 37.6 | 15.6 | 38.3 | 55.3 |
| YOLOS-B | DeiT-Base | 538 | 2 | 42.0 | 62.2 | 44.4 | 19.5 | 45.3 | 62.1 |
| DETR | R34 | 88 | 34 | 31.6 | 47.6 | 33.3 | 13.3 | 34.1 | 49.1 |
| DETR | R50 | 97 | 28 | 39.5 | 60.3 | 41.4 | 17.5 | 43.0 | 59.1 |
| DECO | R50 | 103 | 35 | 37.8 | 57.9 | 40.3 | 17.8 | 42.5 | 53.6 |
| DETR | ConvNeXt-Tiny | 104 | 25 | 42.1 | 63.6 | 44.3 | 18.8 | 45.5 | 62.8 |
| DECO | ConvNeXt-Tiny | 110 | 28 | 41.3 | 62.0 | 43.7 | 20.5 | 45.8 | 59.6 |

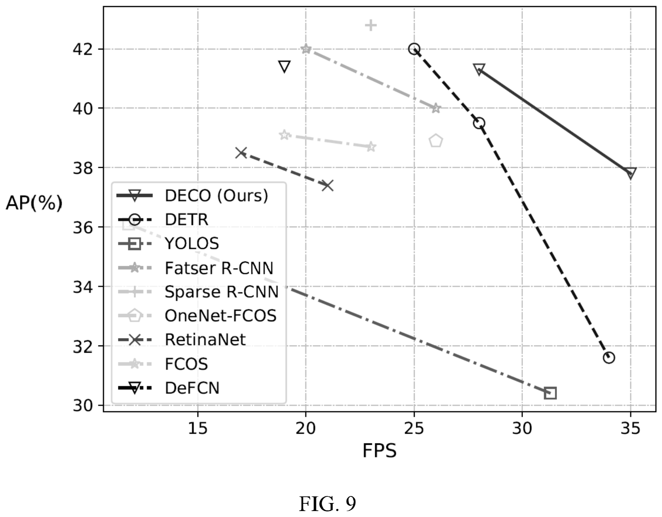

Based on Table 1, a diagram of a curve shown in FIG. 9 (FIG. 9 is a diagram of a comparison result according to an embodiment of this application) may be comprehensively obtained. It can be learned that performance of the target model provided in embodiments of this application is superior to performance of a model provided in a related technology.

In embodiments of this application, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

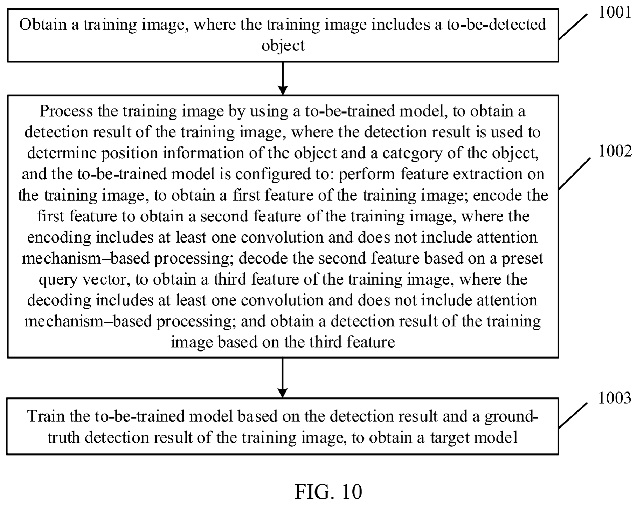

The foregoing describes in detail the object detection method provided in embodiments of this application. The following describes the model training method provided in embodiments of this application. FIG. 10 is a schematic flowchart of the model training method according to an embodiment of this application. As shown in FIG. 10, the method includes the following steps.

1001: Obtain a training image, where the training image includes a to-be-detected object.

In this embodiment, when the to-be-trained model needs to be trained, a batch of training data may be first obtained, and the batch of training data includes the training image. It should be noted that a ground-truth detection result of the training image is known, and the ground-truth detection result of the training image includes ground-truth position information of at least one to-be-detected object, a ground-truth category of the at least one object, and a ground-truth confidence level of the at least one object.

1002: Process the training image by using a to-be-trained model, to obtain a detection result of the training image, where the detection result is used to determine position information of the object and a category of the object, and the to-be-trained model is configured to: perform feature extraction on the training image, to obtain a first feature of the training image; encode the first feature to obtain a second feature of the training image, where the encoding includes at least one convolution and does not include attention mechanism-based processing; decode the second feature based on a preset query vector, to obtain a third feature of the training image, where the decoding includes at least one convolution and does not include attention mechanism-based processing; and obtain a detection result of the training image based on the third feature.

After the training image is obtained, the training image may be input to the to-be-trained model, so that the training image is processed by using the to-be-trained model, to obtain a (predicted) detection result of the training image. The detection result of the training image includes (predicted) position information of the at least one object, a (predicted) category of the at least one object, and a (predicted) confidence level of the at least one object. The to-be-trained model is configured to: perform feature extraction on the training image, to obtain a first feature of the training image; encode the first feature to obtain a second feature of the training image, where the encoding includes at least one convolution and does not include attention mechanism-based processing; decode the second feature based on a preset query vector, to obtain a third feature of the training image, where the decoding includes at least one convolution and does not include attention mechanism-based processing; and obtain a detection result of the training image based on the third feature.

In a possible implementation, the encoding includes at least one of the following: a depthwise convolution or a pointwise convolution.

In a possible implementation, decoding the second feature based on the preset query vector, to obtain the third feature of the training image includes: performing first processing on the preset query vector, to obtain a fourth feature of the query vector, where the first processing includes the depthwise convolution and the pointwise convolution; performing second processing on the second feature and the fourth feature, to obtain a fifth feature of the training image, where the second processing includes the depthwise convolution; and performing third processing on the fifth feature, to obtain the third feature of the training image.

In a possible implementation, performing the first processing on the preset query vector, to obtain the fourth feature of the query vector includes: performing the depthwise convolution and the pointwise convolution on the preset query vector, to obtain a sixth feature of the query vector; and adding the sixth feature and the query vector, to obtain the fourth feature of the query vector.

In a possible implementation, performing the second processing on the second feature and the fourth feature, to obtain the fifth feature of the training image includes: performing upsampling on the fourth feature, to obtain a seventh feature of the query vector; fusing the second feature and the seventh feature, to obtain an eighth feature of the training image; performing the depthwise convolution on the eighth feature, to obtain a ninth feature of the training image; and adding the ninth feature and the seventh feature, to obtain the fifth feature of the training image.

In a possible implementation, performing the third processing on the fifth feature, to obtain the third feature of the training image includes: performing feedforward neural network-based processing on the fifth feature, to obtain a tenth feature of the training image; adding the fifth feature and the tenth feature, to obtain an eleventh feature of the training image; and performing pooling on the eleventh feature, to obtain the third feature of the training image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

It should be understood that, for descriptions of step 1002, refer to related descriptions of step 502 to step 505 in the embodiment shown in FIG. 5. Details are not described herein again.

1003: Train the to-be-trained model based on the detection result and the ground-truth detection result of the training image, to obtain a target model.

After the detection result of the training image is obtained, because the ground-truth detection result of the training image is known, the detection result of the training image and the ground-truth detection result of the training image may be calculated by using a preset loss function, to obtain a target loss. The target loss indicates a difference between the detection result of the training image and the ground-truth detection result of the training image.

After the target loss is obtained, parameters of the to-be-trained model may be updated based on the target loss, to obtain a to-be-trained model with updated parameters, and the to-be-trained model with updated parameters is continuously trained by using a next batch of training data until a model training condition (for example, the target loss is converged) is met, to obtain the target model in the embodiment shown in FIG. 5.

The target model obtained through training in embodiments of this application has a function of object detection. Specifically, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

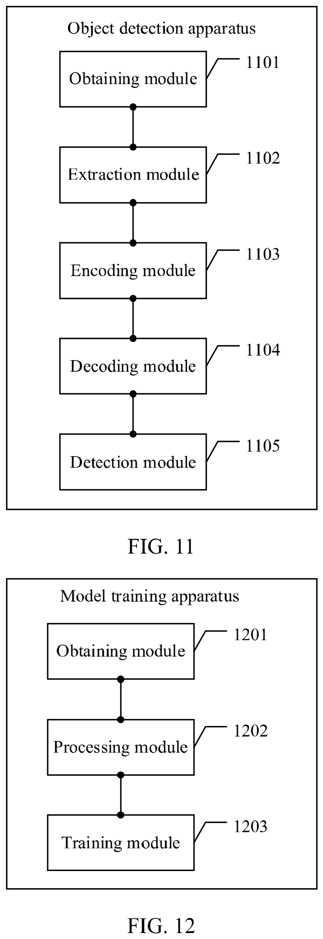

The foregoing describes in detail the object detection method and the model training method provided in embodiments of this application. The following describes an object detection apparatus and a model training apparatus provided in embodiments of this application. FIG. 11 is a diagram of a structure of the object detection apparatus according to an embodiment of this application. As shown in FIG. 11, the apparatus includes a target model, and the apparatus includes:

an obtaining module 1101, configured to obtain a target image, where the target image includes a to-be-detected object;

an extraction module 1102, configured to perform feature extraction on the target image, to obtain a first feature of the target image;

an encoding module 1103, configured to encode the first feature to obtain a second feature of the target image, where the encoding includes at least one convolution and does not include attention mechanism-based processing;

a decoding module 1104, configured to decode the second feature based on a preset query vector, to obtain a third feature of the target image, where the decoding includes at least one convolution and does not include attention mechanism-based processing; and

a detection module 1105, configured to obtain a detection result of the target image based on the third feature, where the detection result is used to determine position information of the object and a category of the object.

In embodiments of this application, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution.

In a possible implementation, the decoding module 1104 is configured to: perform first processing on the preset query vector, to obtain a fourth feature of the query vector, where the first processing includes the depthwise convolution and the pointwise convolution; perform second processing on the second feature and the fourth feature, to obtain a fifth feature of the target image, where the second processing includes the depthwise convolution; and perform third processing on the fifth feature, to obtain the third feature of the target image.

In a possible implementation, the decoding module 1104 is configured to: perform the depthwise convolution and the pointwise convolution on the preset query vector, to obtain a sixth feature of the query vector; and add the sixth feature and the query vector, to obtain the fourth feature of the query vector.

In a possible implementation, the decoding module 1104 is configured to: perform upsampling on the fourth feature, to obtain a seventh feature of the query vector; fuse the second feature and the seventh feature, to obtain an eighth feature of the target image; perform the depthwise convolution on the eighth feature, to obtain a ninth feature of the target image; and add the ninth feature and the seventh feature, to obtain the fifth feature of the target image.

In a possible implementation, the decoding module 1104 is configured to: perform feedforward neural network-based processing on the fifth feature, to obtain a tenth feature of the target image; add the fifth feature and the tenth feature, to obtain an eleventh feature of the target image; and perform pooling on the eleventh feature, to obtain the third feature of the target image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

FIG. 12 is a diagram of a structure of the model training apparatus according to an embodiment of this application. As shown in FIG. 12, the apparatus includes:

an obtaining module 1201, configured to obtain a training image, where the training image includes a to-be-detected object;

a processing module 1202, configured to process the training image by using a to-be-trained model, to obtain a detection result of the training image, where the detection result is used to determine position information of the object and a category of the object, and the to-be-trained model is configured to: perform feature extraction on the training image, to obtain a first feature of the training image; encode the first feature to obtain a second feature of the training image, where the encoding includes at least one convolution and does not include attention mechanism-based processing; decode the second feature based on a preset query vector, to obtain a third feature of the training image, where the decoding includes at least one convolution and does not include attention mechanism-based processing; and obtain a detection result of the training image based on the third feature; and

a training module 1203, configured to train the to-be-trained model based on the detection result and a ground-truth detection result of the training image, to obtain a target model.

The target model obtained through training in embodiments of this application has a function of object detection. Specifically, when object detection is to be performed on a target image, the target image including a to-be-detected object may be first obtained, and the target image is then input to a target model. Next, the target model may perform feature extraction on the target image, to obtain a first feature of the target image. Then, the target model may encode the first feature of the target image, to obtain a second feature of the target image. Subsequently, the target model may decode the second feature of the target image based on a preset query vector, to obtain a third feature of the target image. Finally, the target model may obtain a detection result of the target image based on the third feature, where the detection result may be used to determine position information of the object and a category of the object. In this case, the object detection for the target model is completed. In the foregoing process, main operations performed by the target model include encoding and decoding. Both an encoding operation and a decoding operation include at least one convolution, and neither includes any attention mechanism-based processing. In this way, fewer computing costs are consumed during object detection performing by the target model. Even if a device equipped with the target model has low computing power, the object detection task can be quickly completed, and completion efficiency of the object detection task is improved, thereby improving user experience.

In a possible implementation, the encoding includes at least one of the following: a depthwise convolution or a pointwise convolution.

In a possible implementation, the to-be-trained model is configured to: perform first processing on the preset query vector, to obtain a fourth feature of the query vector, where the first processing includes the depthwise convolution and the pointwise convolution; perform second processing on the second feature and the fourth feature, to obtain a fifth feature of the training image, where the second processing includes the depthwise convolution; and perform third processing on the fifth feature, to obtain the third feature of the training image.

In a possible implementation, the to-be-trained model is configured to: perform the depthwise convolution and the pointwise convolution on the preset query vector, to obtain a sixth feature of the query vector; and add the sixth feature and the query vector, to obtain the fourth feature of the query vector.

In a possible implementation, the to-be-trained model is configured to: perform upsampling on the fourth feature, to obtain a seventh feature of the query vector; fuse the second feature and the seventh feature, to obtain an eighth feature of the training image; perform the depthwise convolution on the eighth feature, to obtain a ninth feature of the training image; and add the ninth feature and the seventh feature, to obtain the fifth feature of the training image.

In a possible implementation, the to-be-trained model is configured to: perform feedforward neural network-based processing on the fifth feature, to obtain a tenth feature of the training image; add the fifth feature and the tenth feature, to obtain an eleventh feature of the training image; and perform pooling on the eleventh feature, to obtain the third feature of the training image.

In a possible implementation, the depthwise convolution includes at least one of the following: a depthwise standard convolution, a depthwise deformable convolution, or a depthwise dynamic convolution.

In a possible implementation, the pointwise convolution includes at least one of the following: a pointwise standard convolution, a pointwise deformable convolution, or a pointwise dynamic convolution.

In a possible implementation, the query vector includes a plurality of parameters, and a quantity of the parameters is associated with a quantity of the objects.

It should be noted that content such as information exchange between the modules/units of the apparatuses and an execution process is based on the same concept as the method embodiments of this application, and produces the same technical effects as the method embodiments of this application. For specific content, refer to the foregoing descriptions in the method embodiments of this application. Details are not described herein again.

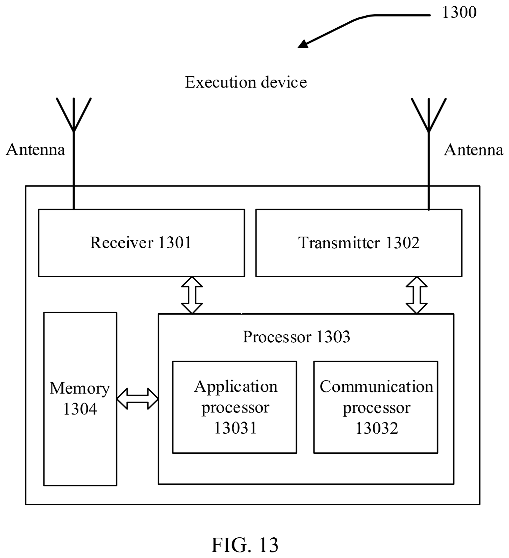

An embodiment of this application further relates to an execution device. FIG. 13 is a diagram of a structure of an execution device according to an embodiment of this application. As shown in FIG. 13, the execution device 1300 may be specifically represented as a mobile phone, a tablet, a notebook computer, a smart wearable device, a server, or the like. This is not limited herein. The object detection apparatus described in the embodiment corresponding to FIG. 11 may be deployed on the execution device 1300, and is configured to implement the object detection function in the embodiment corresponding to FIG. 5. Specifically, the execution device 1300 includes a receiver 1301, a transmitter 1302, a processor 1303, and a memory 1304 (there may be one or more processors 1303 in the execution device 1300, and one processor is used as an example in FIG. 13.) The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data for the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1303, or may be implemented by the processor 1303. The processor 1303 may be an integrated circuit chip and has a signal processing capability. In an implementation process, steps in the foregoing methods can be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1303 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware of the processor.

The receiver 1301 may be configured to: receive input digital or character information, and generate a signal input related to related settings and function control of the execution device. The transmitter 1302 may be configured to output digital or character information through a first interface. The transmitter 1302 may be further configured to send instructions to a disk pack through the first interface, to modify data in the disk pack. The transmitter 1302 may further include a display device, for example, a display.

In this embodiment of this application, in one case, the processor 1303 is configured to perform object detection on the target image by using the target model in the embodiment corresponding to FIG. 5.

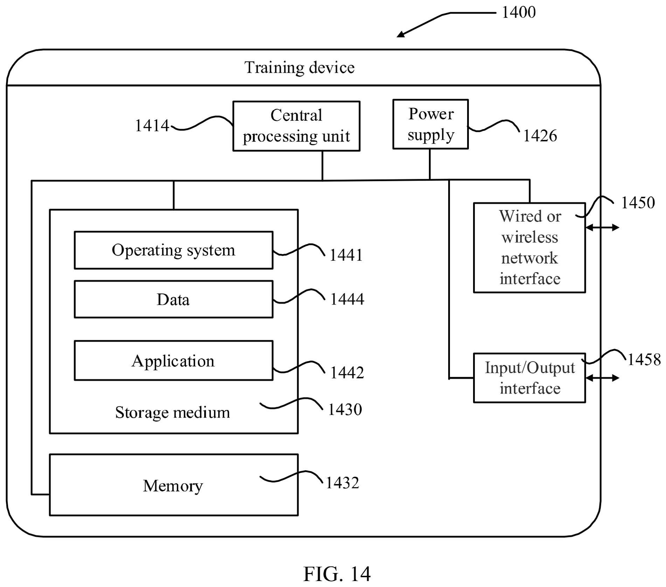

An embodiment of this application further relates to a training device. FIG. 14 is a diagram of a structure of the training device according to an embodiment of this application. As shown in FIG. 14, the training device 1400 is implemented by one or more servers, the training device 1400 may vary greatly due to different configurations or performance, and may include one or more central processing units (central processing units, CPU) 1414 (for example, one or more processors), a memory 1432, and one or more storage media 1430 (for example, one or more mass storage devices) that store an application 1442 or data 1444. The memory 1432 and the storage medium 1430 may perform transitory storage or persistent storage. A program stored in the storage medium 1430 may include one or more modules (not shown in the figure), and each module may include a series of instruction operations for the training device. Further, the central processing unit 1414 may be configured to: communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441, for example, Windows ServerTM, Mac OS XTM, UnixTM, LinuxTM, and FreeBSDTM.

Specifically, the training device may perform the model training method in the embodiment corresponding to FIG. 10, to obtain the target model.

An embodiment of this application further relates to a computer-readable storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

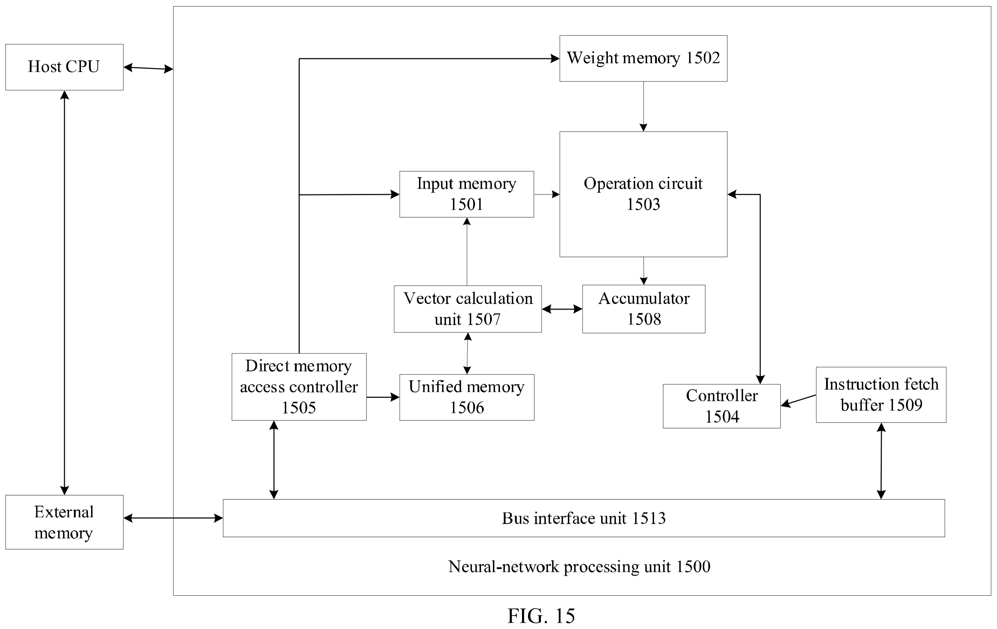

Specifically, FIG. 15 is a diagram of a structure of the chip according to an embodiment of this application. The chip may be represented as a neural-network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of process engines (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches, from a weight memory 1502, data corresponding to the matrix B, and caches the data on each PE in the operation circuit. The operation circuit fetches data of the matrix A from an input memory 1501, performs a matrix operation on the data and the matrix B, and stores an obtained partial result or final result of the matrix in an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505.

The input data is also transferred to the unified memory 1506 by using the DMAC.

A BIU is a bus interface unit, namely, a bus interface unit 1513, and is configured to perform interaction between an AXT bus and the DMAC and between the AXI bus and an instruction fetch buffer (Instruction Fetch Buffer, TFB) 1509.

The bus interface unit (Bus Interface Unit, BIU for short) 1513 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. If required, further processing is performed on an output of the operation circuit 1503, for example, vector multiplication, vector addition, an exponential operation, a logarithmic operation, or a value comparison. The vector calculation unit 1507 is mainly configured to perform network calculation at a non-convolutional/fully connected layer in a neural network, for example, batch normalization (batch normalization), pixel-level summation, and upsampling of a predicted label plane.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a predicted label plane extracted from a convolutional layer, and for another example, accumulate vectors of values to generate an activation value. In some implementations, the vector calculation unit 1507 generates a normalized value, a pixel-level summation value, or both a normalized value and a pixel-level summation value. In some implementations, the processed output vector can be used as an activation input to the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, as for this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to the embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media.

The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

**Claims**

1. An object detection method, wherein the method is implemented by using a target model, and the method comprises:

   obtaining a target image, wherein the target image comprises a to-be-detected object;
   performing feature extraction on the target image, to obtain a first feature of the target image;
   encoding the first feature to obtain a second feature of the target image, wherein the encoding comprises at least one convolution and does not comprise attention mechanism-based processing;
   decoding the second feature based on a preset query vector, to obtain a third feature of the target image, wherein the decoding comprises at least one convolution and does not comprise attention mechanism-based processing; and
   obtaining a detection result of the target image based on the third feature, wherein the detection result is used to determine position information of the object and a category of the object.

2. The method according to claim 1, wherein the encoding comprises at least one of the following: a depthwise convolution or a pointwise convolution.

3. The method according to claim 1 or 2, wherein decoding the second feature based on the preset query vector, to obtain the third feature of the target image comprises:

   performing first processing on the preset query vector, to obtain a fourth feature of the query vector, wherein the first processing comprises the depthwise convolution and the pointwise convolution;
   performing second processing on the second feature and the fourth feature, to obtain a fifth feature of the target image, wherein the second processing comprises the depthwise convolution; and
   performing third processing on the fifth feature, to obtain the third feature of the target image.

4. The method according to claim 3, wherein performing the first processing on the preset query vector, to obtain the fourth feature of the query vector comprises:

   performing the depthwise convolution and the pointwise convolution on the preset query vector, to obtain a sixth feature of the query vector; and
   adding the sixth feature and the query vector, to obtain the fourth feature of the query vector.

5. The method according to claim 3 or 4, wherein performing the second processing on the second feature and the fourth feature, to obtain the fifth feature of the target image comprises:

   performing upsampling on the fourth feature, to obtain a seventh feature of the query vector;
   fusing the second feature and the seventh feature, to obtain an eighth feature of the target image;
   performing the depthwise convolution on the eighth feature, to obtain a ninth feature of the target image; and
   adding the ninth feature and the seventh feature, to obtain the fifth feature of the target image.

6. The method according to any one of claims 3 to 5, wherein performing the third processing on the fifth feature, to obtain the third feature of the target image comprises:

   performing feedforward neural network-based processing on the fifth feature, to obtain a tenth feature of the target image;
   adding the fifth feature and the tenth feature, to obtain an eleventh feature of the target image; and
   perform pooling on the eleventh feature, to obtain the third feature of the target image.

7. The method according to any one of claims 2 to 6, wherein the depthwise convolution comprises at least one of the following: a depthwise standard convolution, a depthwise deformable convolution, or a depthwise dynamic convolution.

8. The method according to any one of claims 2 to 7, wherein the pointwise convolution comprises at least one of the following: a pointwise standard convolution, a pointwise deformable convolution, or a pointwise dynamic convolution.

9. The method according to any one of claims 1 to 8, wherein the query vector comprises a plurality of parameters, and a quantity of the parameters is associated with a quantity of the objects.

10. A model training method, comprising:

   obtaining a training image, wherein the training image comprises a to-be-detected object;
   processing the training image by using a to-be-trained model, to obtain a detection result of the training image, wherein the detection result is used to determine position information of the object and a category of the object, and the to-be-trained model is configured to: perform feature extraction on the training image, to obtain a first feature of the training image; encode the first feature to obtain a second feature of the training image, wherein the encoding comprises at least one convolution and does not comprise attention mechanism-based processing; decode the second feature based on a preset query vector, to obtain a third feature of the training image, wherein the decoding comprises at least one convolution and does not comprise attention mechanism-based processing; and obtain a detection result of the training image based on the third feature; and
   training the to-be-trained model based on the detection result and a ground-truth detection result of the training image, to obtain a target model.

11. The method according to claim 10, wherein the encoding comprises at least one of the following: a depthwise convolution or a pointwise convolution.

12. The method according to claim 10 or 11, wherein decoding the second feature based on the preset query vector, to obtain the third feature of the training image comprises:

   performing first processing on the preset query vector, to obtain a fourth feature of the query vector, wherein the first processing comprises the depthwise convolution and the pointwise convolution;
   performing second processing on the second feature and the fourth feature, to obtain a fifth feature of the training image, wherein the second processing comprises the depthwise convolution; and
   performing third processing on the fifth feature, to obtain the third feature of the training image.

13. The method according to claim 12, wherein performing the first processing on the preset query vector, to obtain the fourth feature of the query vector comprises:

   performing the depthwise convolution and the pointwise convolution on the preset query vector, to obtain a sixth feature of the query vector; and
   adding the sixth feature and the query vector, to obtain the fourth feature of the query vector.

14. The method according to claim 12 or 13, wherein performing the second processing on the second feature and the fourth feature, to obtain the fifth feature of the training image comprises:

   performing upsampling on the fourth feature, to obtain a seventh feature of the query vector;
   fusing the second feature and the seventh feature, to obtain an eighth feature of the training image;
   performing the depthwise convolution on the eighth feature, to obtain a ninth feature of the training image; and
   adding the ninth feature and the seventh feature, to obtain the fifth feature of the training image.

15. The method according to any one of claims 12 to 14, wherein performing the third processing on the fifth feature, to obtain the third feature of the training image comprises:

   performing feedforward neural network-based processing on the fifth feature, to obtain a tenth feature of the training image;
   adding the fifth feature and the tenth feature, to obtain an eleventh feature of the training image; and
   performing pooling on the eleventh feature, to obtain the third feature of the training image.

16. The method according to any one of claims 11 to 15, wherein the depthwise convolution comprises at least one of the following: a depthwise standard convolution, a depthwise deformable convolution, or a depthwise dynamic convolution.

17. The method according to any one of claims 11 to 16, wherein the pointwise convolution comprises at least one of the following: a pointwise standard convolution, a pointwise deformable convolution, or a pointwise dynamic convolution.

18. The method according to any one of claims 10 to 17, wherein the query vector comprises a plurality of parameters, and a quantity of the parameters is associated with a quantity of the objects.

19. An object detection apparatus, wherein the apparatus comprises a target model, and the apparatus comprises:

an obtaining module, configured to obtain a target image, wherein the target image comprises a to-be-detected object;
an extraction module, configured to perform feature extraction on the target image, to obtain a first feature of the target image;
an encoding module, configured to encode the first feature to obtain a second feature of the target image, wherein the encoding comprises at least one convolution and does not comprise attention mechanism-based processing;
a decoding module, configured to decode the second feature based on a preset query vector, to obtain a third feature of the target image, wherein the decoding comprises at least one convolution and does not comprise attention mechanism-based processing; and
a detection module, configured to obtain a detection result of the target image based on the third feature, wherein the detection result is used to determine position information of the object and a category of the object.

20. A model training apparatus, wherein the apparatus comprises:

an obtaining module, configured to obtain a training image, wherein the training image comprises a to-be-detected object;
a processing module, configured to process the training image by using a to-be-trained model, to obtain a detection result of the training image, wherein the detection result is used to determine position information of the object and a category of the object, and the to-be-trained model is configured to: perform feature extraction on the training image, to obtain a first feature of the training image; encode the first feature to obtain a second feature of the training image, wherein the encoding comprises at least one convolution and does not comprise attention mechanism-based processing; decode the second feature based on a preset query vector, to obtain a third feature of the training image, wherein the decoding comprises at least one convolution and does not comprise attention mechanism-based processing; and obtain a detection result of the training image based on the third feature; and
a training module, configured to train the to-be-trained model based on the detection result and a ground-truth detection result of the training image, to obtain a target model.

21. An object detection apparatus, wherein the apparatus comprises a memory and a processor, the memory stores code, the processor is configured to execute the code, and when the code is executed, the object detection apparatus performs the method according to any one of claims 1 to 18.

22. A computer storage medium, wherein the computer storage medium stores one or more instructions, and when the instructions are executed by one or more computers, the one or more computers are enabled to implement the method according to any one of claims 1 to 18.

23. A computer program product, wherein the computer program product stores instructions, and when the instructions are executed by a computer, the computer is enabled to implement the method according to any one of claims 1 to 18.

Intelligent information chain →

Smart product and industry application

| Translation/Text analysis/... | Voice/Vision/ Image/... |

| Data | Data processing: | Data training/ Machine learning/ Deep learning | Searching/ Inference/ Decision making | ... |

| Infrastructure | Sensor | Smart chip | Basic platform | ... |

IT value chain

FIG. 1

FIG. 2a

Interaction interface

Image

Object detection result of the image

Memory

Processor

Data training/Machine learning/Deep learning

Searching/ Inference/ Decision making

...

Data processing device (server)

13:21

EP 4 715 754 A1

| User | Smart terminal |

13:21

Interaction interface

| Image | Object detection result of the image |

| Memory | Processor: | Data training/Machine learning/Deep learning | Searching/ Inference/ Decision making | ... |

Smart terminal

FIG. 2b

FIG. 2c

FIG. 3

FIG. 4

Obtain a target image, where the target image includes a to-be-detected object — 501

Perform feature extraction on the target image, to obtain a first feature of the target image — 502

Encode the first feature to obtain a second feature of the target image, where the encoding includes at least one convolution and does not include attention mechanism–based processing — 503

Decode the second feature based on a preset query vector, to obtain a third feature of the target image, where the decoding includes at least one convolution and does not include attention mechanism–based processing — 504

Obtain a detection result of the target image based on the third feature, where the detection result is used to determine position information of the object and a category of the object — 505

FIG. 5

Target image · Backbone network · Encoder · Decoder · Query vector · Encoder · Detection result of the target image · Cat

FIG. 6

FIG. 7

FIG. 8

FIG. 9

Obtain a training image, where the training image includes a to-be-detected object — 1001

Process the training image by using a to-be-trained model, to obtain a detection result of the training image, where the detection result is used to determine position information of the object and a category of the object, and the to-be-trained model is configured to: perform feature extraction on the training image, to obtain a first feature of the training image; encode the first feature to obtain a second feature of the training image, where the encoding includes at least one convolution and does not include attention mechanism–based processing; decode the second feature based on a preset query vector, to obtain a third feature of the training image, where the decoding includes at least one convolution and does not include attention mechanism–based processing; and obtain a detection result of the training image based on the third feature — 1002

Train the to-be-trained model based on the detection result and a ground-truth detection result of the training image, to obtain a target model — 1003

FIG. 10

Object detection apparatus

Obtaining module —— 1101

Extraction module —— 1102

Encoding module —— 1103

Decoding module —— 1104

Detection module —— 1105

FIG. 11

Model training apparatus

Obtaining module —— 1201

Processing module —— 1202

Training module —— 1203

FIG. 12

1300

Execution device

Antenna

Antenna

| Receiver 1301 | Transmitter 1302 |
|---|---|

Processor 1303

| Memory 1304 | Application processor 13031 | Communication processor 13032 |
|---|---|---|

FIG. 13

1400

Training device

1414 — Central processing unit

Power supply — 1426

Wired or wireless network interface — 1450

Operating system — 1441

Data — 1444

Application — 1442

Storage medium — 1430

Input/Output interface — 1458

Memory — 1432

FIG. 14

FIG. 15

## INTERNATIONAL SEARCH REPORT

| International application No. |
|---|
| **PCT/CN2024/101161** |

### A. CLASSIFICATION OF SUBJECT MATTER

G06V 10/77(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, IEEE, ISI, CNKI: 目标, 检测, 图像, 识别, 编码, 解码, 特征, 注意力, 卷积, target, detection, image, recognition, encod+, decod+, feature, attention, convolution

### C. DOCUMENTS CONSIDERED TO BE RELEVANT

| Category* | Citation of document, with indication, where appropriate, of the relevant passages | Relevant to claim No. |
|---|---|---|
| PX | CN 117011620 A (HUAWEI TECHNOLOGIES CO., LTD.) 07 November 2023 (2023-11-07) claims 1-23 | 1-23 |
| A | CN 113762278 A (MCC ROAD&BRIDGE CONSTRUCTION CO., LTD.) 07 December 2021 (2021-12-07) description, paragraphs 51-134 | 1-23 |
| A | CN 113591840 A (BEIJING KUANGSHI TECHNOLOGY CO., LTD. et al.) 02 November 2021 (2021-11-02) entire document | 1-23 |
| A | CN 115311465 A (BEIJING INSTITUTE OF GRAPHIC COMMUNICATION) 08 November 2022 (2022-11-08) entire document | 1-23 |
| A | US 2022351487 A1 (BEIJING KINGSOFT DIGITAL ENTERTAINMENT CO., LTD.) 03 November 2022 (2022-11-03) entire document | 1-23 |

☑ Further documents are listed in the continuation of Box C.       ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 August 2024** | **21 August 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| :--- |
| **PCT/CN2024/101161** |

### C. DOCUMENTS CONSIDERED TO BE RELEVANT

| Category* | Citation of document, with indication, where appropriate, of the relevant passages | Relevant to claim No. |
| :---: | :--- | :---: |
| A | WO 2022095583 A1 (SYNTHESIS ELECTRONIC TECHNOLOGY CO., LTD.) 12 May 2022 (2022-05-12)<br>entire document | 1-23 |

## INTERNATIONAL SEARCH REPORT
### Information on patent family members

| International application No. |
| --- |
| **PCT/CN2024/101161** |

| Patent document cited in search report | | | Publication date (day/month/year) | Patent family member(s) | | | Publication date (day/month/year) |
| --- | --- | --- | --- | --- | --- | --- | --- |
| CN | 117011620 | A | 07 November 2023 | None | | | |
| CN | 113762278 | A | 07 December 2021 | None | | | |
| CN | 113591840 | A | 02 November 2021 | None | | | |
| CN | 115311465 | A | 08 November 2022 | None | | | |
| US | 2022351487 | A1 | 03 November 2022 | WO | 2021037113 | A1 | 04 March 2021 |
| | | | | EP | 4024274 | A1 | 06 July 2022 |
| | | | | JP | 2022546811 | A | 09 November 2022 |
| | | | | CN | 110309839 | A | 08 October 2019 |
| WO | 2022095583 | A1 | 12 May 2022 | CN | 112308004 | A | 02 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310792993X